# EUROPEAN PATENT APPLICATION

(11) **EP 2 352 220 A2**
(43) Date of publication of application: **03.08.2011**
(21) Application number: 11152586.1
(22) Date of filing: 28.01.2011
(51) Int. Cl.: H02K 3/52

(54) **Electric motor and mobile object**

(30) Priority: 29.01.2010 JP 2010019786; 28.12.2010 JP 2010293822
(71) Applicant: SANYO ELECTRIC CO., LTD., Moriguchi-shi, Osaka 570-8677 (JP)
(72) Inventor: Sagara, Hiroaki, Moriguchi City Osaka 570-8677 (JP); Nagao, Takeshi, Moriguchi City Osaka 570-8677 (JP); Taguchi, Kenji, Moriguchi City Osaka 570-8677 (JP)
(74) Representative: Calderbank, Thomas Roger

(57) **Abstract**

An electric motor includes: a rotor configured to rotate about a rotating shaft; a stator (20) having a coil (75); and a mold resin (20A) configured to mold the stator. The stator (20) includes: an inner peripheral bus ring (160) which is provided along an inner periphery of the stator (20) and which is connected to the coil (75); and an outer peripheral bus ring (150) which is provided along an outer periphery of the stator (20) and which is connected to the coil (75). The inner peripheral bus ring (160) is provided at a position deeper than a position of the outer peripheral bus ring (150) in a direction of the rotating shaft.

## Description

This application is based upon and claims the benefit of priority from prior Japanese Patent Application No. 2010-019786, filed on January 29, 2010; and prior Japanese Patent Application No. 2010-293822, filed on December 28, 2010; the entire contents of which are incorporated herein by reference.

The present invention relates to an electric motor including mold resin to mold a stator, and to a mobile object.

An electric motor including a case body configured to hold a stator core, coils, and a rotor has heretofore been known. The electric motor rotates the rotor provided on an inner side of the stator core in a radial direction about a rotating shaft of the rotor by repeating polarity inversion of the coils. Meanwhile, the stator core includes stator teeth, and insulators wound around the coils are attached to the stator teeth. Here, the electric motor is used as a power source of a mobile object, for example.

For instance, an electric motor is proposed which includes insulators each provided with a bus ring holding portion configured to hold bus rings connected to coils (such as in Japanese Patent Application Publication No. 2009-247059).

Here, since the electric motor is used as a power source of a mobile object, for example, there is a demand for downsizing the electric motor.

A first aspect of an electric motor (electric motor) includes: a rotor (rotor 80) configured to rotate about a rotating shaft; a stator (stator 20) having a coil (coil 75); and a mold resin (mold resin 20A) configured to mold the stator. The stator includes: an inner peripheral bus ring (inner peripheral bus ring 160) which is provided along an inner periphery of the stator and which is connected to the coil; and an outer peripheral bus ring (outer peripheral bus ring 150) which is provided along an outer periphery of the stator and which is connected to the coil. The inner peripheral bus ring is provided at a position deeper than a position of the outer peripheral bus ring in a direction of the rotating shaft.

In the first aspect, the mold resin may have a cutout portion (cutout portion 20C) of annular shape deeper than an upper end of the outer peripheral bus ring in the direction of the rotating shaft.

In the first aspect, a sealing member may be disposed in the cutout portion, to seal a portion inward of the cutout portion in a radial direction of a stator core.

In the first aspect, a cylindrical coolant pipe forming a flow passage of a coolant may be disposed in the cutout portion.

In the first aspect, the electric motor may further include a lid body configured to cover an opening in which the rotor is housed. The lid body may include a reinforcing rib to reinforce the lid body. The reinforcing rib provided on the lid body may be disposed in the cutout portion.

A second aspect of a mobile object includes the electric motor of first aspect.

In the drawings:
Fig. 1 is a perspective view showing an electric motor 100 according to a first embodiment.
Fig. 2 is a perspective view showing the electric motor 100 according to the first embodiment
Fig. 3 is a perspective view showing a case body 10 according to the first embodiment.
Fig. 4 is a perspective view showing a lid body 30 according to the first embodiment.
Fig. 5 is a cross-sectional view showing the lid body 30 according to the first embodiment.
Fig. 6 is a plan view showing a stator core 70 according to the first embodiment.
Fig. 7 is a perspective view showing a stator 20 before being molded according to the first embodiment.
Fig. 8 is a plan view showing the stator 20 before being molded according to the first embodiment.
Fig. 9 is an enlarged cross-sectional view showing part of the stator 20 before being molded according to the first embodiment.
Fig. 10 is an exploded perspective view showing the stator 20 before being molded according to the first embodiment.
Fig. 11 is a perspective view showing the stator 20 after being molded according to the first embodiment.
Fig. 12 is a cross-sectional view showing the stator 20 after being molded according to the first embodiment.
Fig. 13 is an enlarged cross-sectional view showing part of the stator 20 after being molded according to the first embodiment.
Fig. 14 is a view for explaining a method of manufacturing the electric motor 100 according to the first embodiment.
Fig. 15 is a view for explaining the method of manufacturing the electric motor 100 according to the first embodiment.
Fig. 16 is a view showing an example of an electric vehicle 500 according to a second embodiment.
Fig. 17 is a view showing an example of a boat 700 according to a third embodiment.
Fig. 18 is a view showing an example of an outboard motor 720 according to the third embodiment.

An electric motor according to embodiments of the present invention will be described below with reference to the accompanying drawings. In the following drawings, identical or similar constituents are denoted by identical or similar reference numerals.

It should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### (Outline of Embodiments)

An electric motor according to each of the embodiments includes a rotor configured to rotate about a rotating shaft, a stator provided with coils, and mold resin to mold the stator. The stator includes an inner peripheral bus ring provided along an inner periphery of the stator and connected to the coils, and outer peripheral bus rings provided along an outer periphery of the stator and connected to the coils. The inner peripheral bus ring is provided at a position deeper than that of the outer peripheral bus rings in a rotating shaft direction.

According to the embodiments, it is to be noted that the mold resin covers the coils, the inner peripheral bus ring, and the outer peripheral bus rings.

According to the embodiments, the inner peripheral bus ring is provided at the position deeper than that of the outer peripheral bus rings in the rotating shaft direction. Therefore, it is possible to secure a space for disposing other members on an inner side of the outer peripheral bus rings in a radial direction of the stator without increasing the size of the electric motor. Other members include a sealing member, a coolant pipe, a reinforcing rib provided on a lid body, and the like. Hence it is possible to downsize the electric motor.

### (First Embodiment)

### (Configuration of Electric Motor)

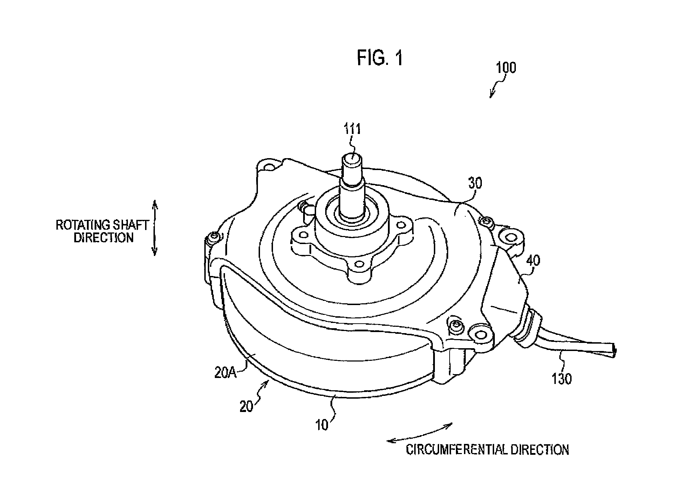

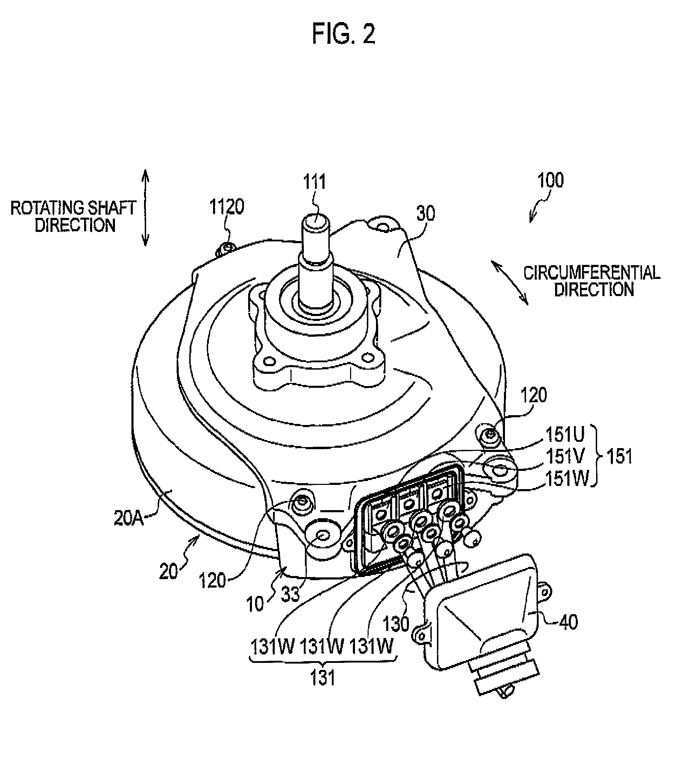

An electric motor according to a first embodiment will be described below with reference to the accompanying drawings. Fig. 1 and Fig. 2 are each a perspective view showing an electric motor 100 according to the first embodiment.

As shown in Fig. 1 and Fig. 2, the electric motor 100 includes a case body 10, a stator 20, a lid body 30, and a terminal cover 40.

Note that the first embodiment will exemplify a case where the electric motor 100 is a three-phase motor (a U phase, a V phase, and a W phase).

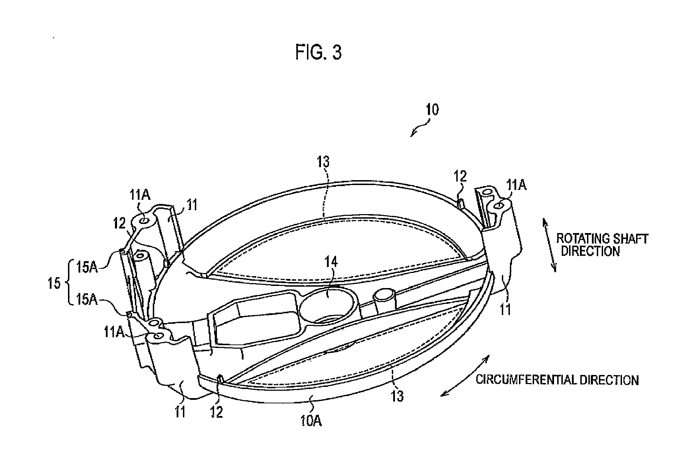

The case body 10 holds the stator 20 molded by mold resin 20A. Specifically, the case body 10 holds the stator 20 molded by the mold resin 20A from the side opposite to the lid body 30 (a first main surface of the stator 20 to be described later). Here, the case body 10 is formed of a member having predetermined rigidity such as a metal member. Details of the case body 10 will be described later (see Fig. 3).

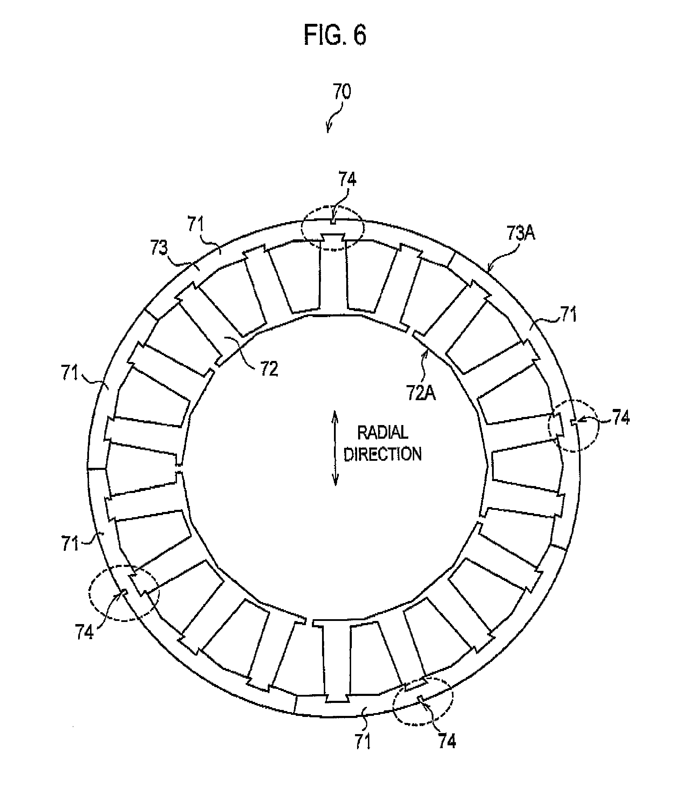

The stator 20 is molded by the mold resin 21A. The stator 20 has an annular shape and is configured to house a rotor 80 to be described later. Specifically, the stator 20 includes a stator core 70 to be described later. The stator core 70 includes insulators 76 and coils 75 to be described later, the coils 75 wound around the respective insulators 76. In other words, the stator 20 includes the coils 75 to be described later. Here, the mold resin 20A is formed of a member having a thermosetting property. Details of the stator 20 will be described later (see Fig. 6 to Fig. 13).

Among surfaces of the stator 20, a surface on which the case body 10 is provided will be hereinafter referred to as the first main surface while a surface on which the lid body 30 is provide will be hereinafter referred to as a second main surface.

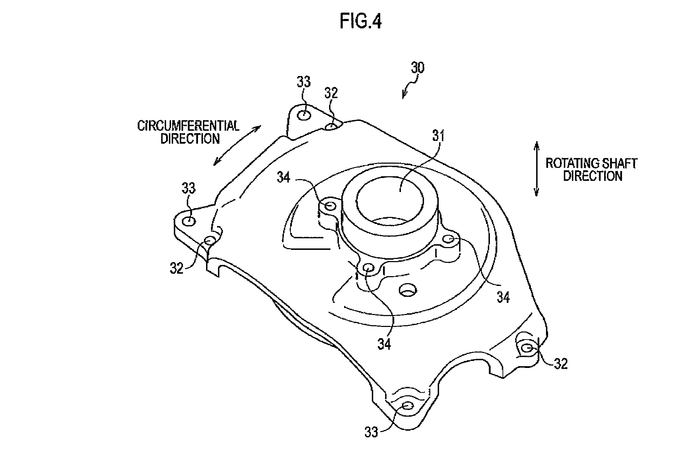

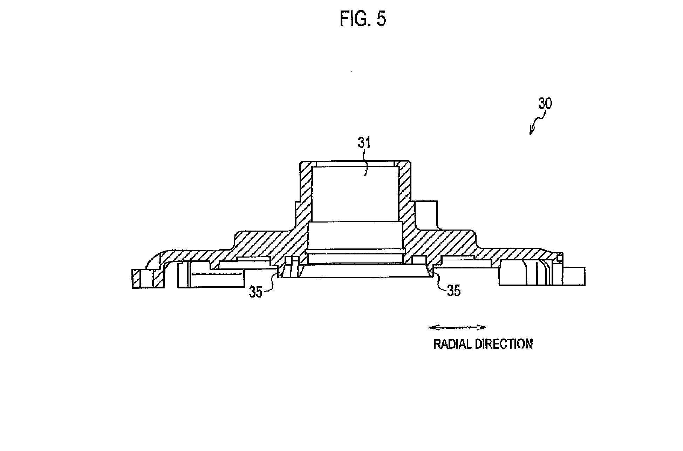

The lid body 30 is provided on the second main surface of the stator 20. Moreover, the lid body 30 is attached to the case body 10 by using bolts 120. Here, the lid body 30 is made of a member having predetermined rigidity such as a metal member. For example, a braking mechanism such as a drum brake is attached to the lid body 30. Details of the lid body 30 will be described later (see Fig. 4 and Fig. 5).

The terminal cover 40 is a cover configured to protect connectors 131 (a connector 131U, a connector 131V, and a connector 131W) provided at one end of a cable 130. Moreover, the terminal cover 40 protects terminals 151 (a terminal 151U, a terminal 151V, and a terminal 151W) provided on outer peripheral bus rings 150 to be described later. Here, the cable 130 is a power line for supplying electric power to the coils 75 to be described later through the outer peripheral bus rings 150.

A rotating shaft 111 transmits torque from the rotor 80 to be described later. For example, the rotating shaft 111 transmits the torque to a drive wheel provided on a mobile object.

It is to be noted that a circumferential direction of the annular stator will be hereinafter simply referred to as a "circumferential direction", that a radial direction of the annular stator will be hereinafter simply referred to as a "radial direction", and that a direction in which the rotating shaft 111 extends will be hereinafter simply referred to as a "rotating shaft direction".

### (Configuration of Case Body)

The case body according to the first embodiment will be described below with reference to the accompanying drawings. Fig. 3 is a perspective view showing the case body 10 according to the first embodiment.

As shown in Fig. 3, the case body 10 includes guide ribs 11, protrusions 12, open spaces 13, a shaft hole 14, and a holder placement portion 15.

Each guide rib 11 is configured to hold part of an outer periphery of the stator core 70 to be described later. Specifically, the guide rib 11 has a shape protruding in the rotating shaft direction. The guide rib 11 includes a bolt hole 11A into which the bolt 120 for attaching the lid body 30 to the case body 10 is screwed.

Each protrusion 12 is engaged with corresponding one of grooves 74 provided on an outer peripheral portion of the stator core 70 to be described later. Specifically, the protrusion 12 has a shape protruding in the rotating shaft direction.

The mold resin 20A to mold the stator core 70 is filled in each open space 13. Moreover, the mold resin 20A is exposed to the outside from the open space 13.

The shaft hole 14 is a hole to accept the rotating shaft 111 provided on the rotor 80 together with a bearing mechanism such as a ball bearing (not shown).

A plate-like terminal holder 140 configured to hold the terminals 151 provided on the outer peripheral bus rings 150 is engaged with the holder placement portion 15 as will be described later. Specifically, slits (not shown) formed along a plate surface (main surface) of the terminal holder 140 are provided at a lower end of the plate-like terminal holder 140, and the plate-like terminal holder 140 is attached to the holder placement portion 15 in a way that the slit is fitted to a fixation wall 15A provided on a lower part of the holder placement portion 15.

### (Configuration of Lid Body)

A configuration of the lid body according to the first embodiment will be described below with reference to the accompanying drawings. Fig. 4 is a perspective view showing the lid body 30 according to the first embodiment. Fig. 5 is a cross-sectional view showing the lid body 30 according to the first embodiment.

As shown in Fig. 4 and Fig. 5, the lid body 30 includes a shaft hole 31, bolt holes 32, bolt holes 33, bolt holes 34, and a reinforcing rib 35.

The shaft hole 31 is a hole to accept the rotating shaft 111 provided on the rotor 80 together with a bearing mechanism such as a ball bearing (not shown).

Each bolt hole 32 is a hole into which the bolt 120 for attaching the lid body 30 to the case body 10 is screwed.

Each bolt hole 33 is a hole to which a bolt for attaching a swing arm to be described later is inserted.

Each bolt hole 34 is a hole into which a bolt for attaching a breaking mechanism to the lid body 30 is screwed.

The reinforcing rib 35 is a rib which reinforces the lid body 30. Specifically, the reinforcing rib 35 has a shape protruding in the rotating shaft direction. Moreover, the reinforcing rib 35 has a continuous annular shape along the circumferential direction. Here, the reinforcing rib 35 may be partially discontinuous in the circumferential direction.

### (Configuration of Stator Core)

A configuration of the stator core according to the first embodiment will be described below with reference to the accompanying drawings. Fig. 6 is a plan view showing the stator core 70 according to the first embodiment.

As shown in Fig. 6, the stator core 70 has an annular shape. The rotor 80 to be described later is disposed on the inner side of the stator core 70 in the radial direction. Specifically, the stator core 70 is formed of multiple stator core segments 71 and is provided with stator teeth 72 and a stator yoke 73.

Here, the stator core 70 may be integrally formed instead of being divided into the multiple stator core segments 71.

Each of the stator teeth 72 has a shape protruding from the stator yoke 73 inward in the radial direction. The insulators 76 to be described later are attached to the stator teeth 72, respectively. The coils 75 to be described later are wound around the insulators 76, respectively. Tip ends 72a of the stator teeth 72 define a substantially cylindrical hollow.

The stator yoke 73 has an annular shape and forms the outer periphery of the stator core 70. The grooves 74 to be engaged with the protrusions 12 on the case body 10 are provided on an outer peripheral side surface 73A of the stator yoke 73. The grooves 74 have shapes extending along the shaft direction.

### (Configuration of Stator before being Molded)

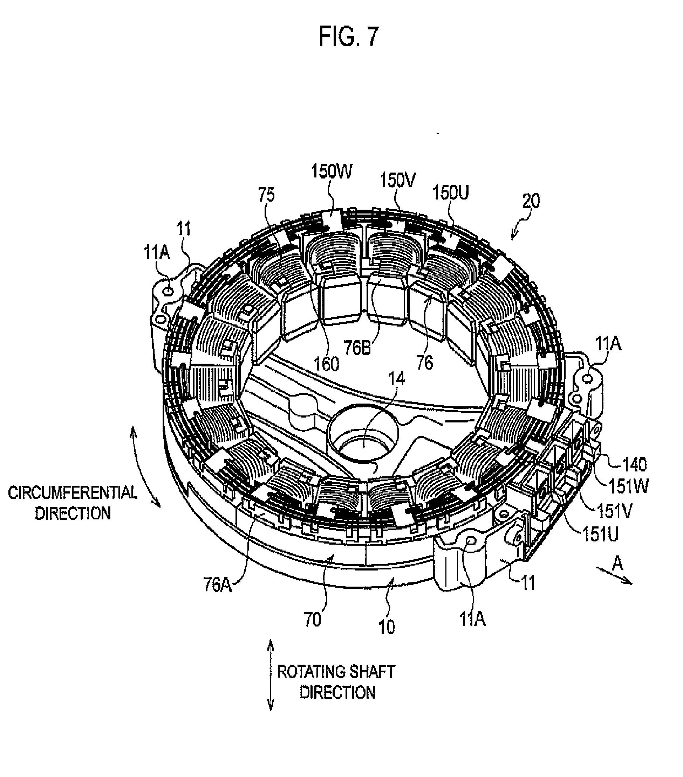

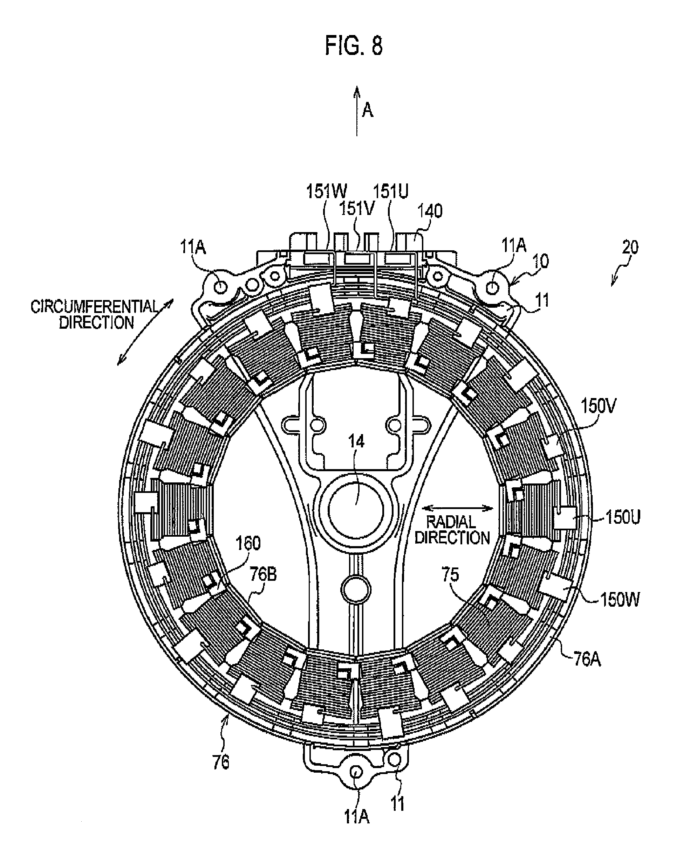

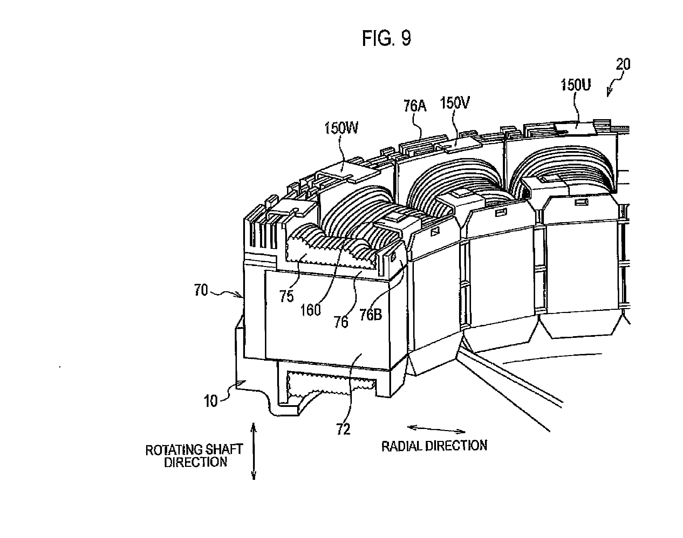

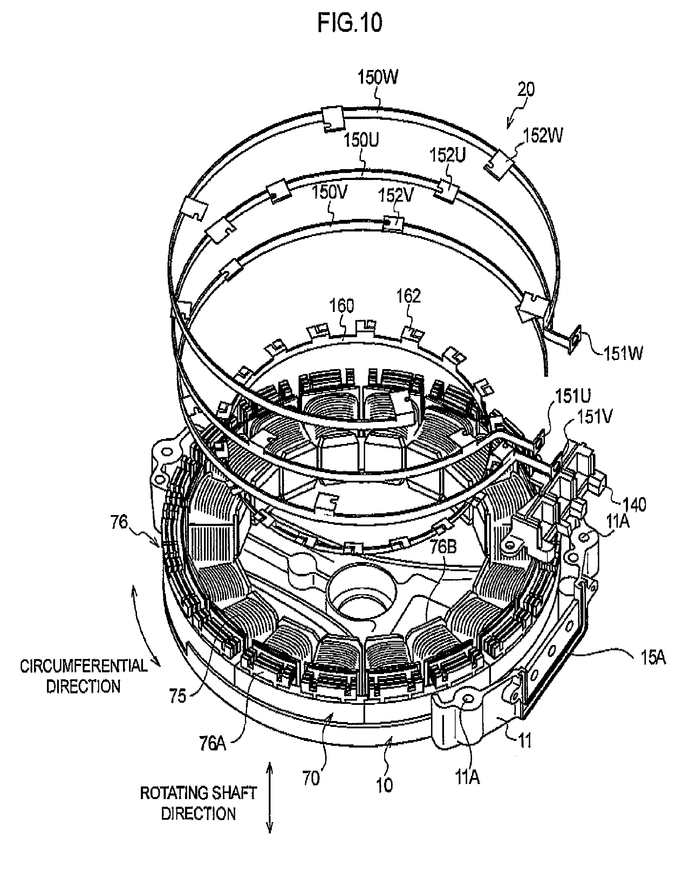

A configuration of the stator before being molded according to the first embodiment will be described below with reference to the accompanying drawings. Fig. 7 is a perspective view showing the stator 20 before being molded according to the first embodiment. Fig. 8 is a plan view showing the stator 20 before being molded according to the first embodiment. Fig. 9 is an enlarged cross-sectional view showing part of the stator 20 before being molded according to the first embodiment. Fig. 10 is an exploded perspective view showing the stator 20 before being molded according to the first embodiment. It is to be noted that the stator 20 is assembled on the case body 10 in Fig. 8 to Fig. 10.

The stator 20 has the annular shape as shown in Fig. 8 to Fig. 10. Meanwhile, in addition to the stator core 70 described above, the stator 20 includes the coils 75, the insulators 76, the terminal holder 140, the outer peripheral bus rings 150, and an inner peripheral bus ring 160.

The coils 75 are wound around the insulators 76. Here, the coils 75 include U-phase coils, V-phase coils, and W-phase coils.

The insulators 76 are attached on the stator teeth 72 of the stator core 70, respectively. Each insulator 76 is formed of an insulating member. Each insulator 76 includes an outer peripheral bus ring holding portion 76A and an inner peripheral bus ring holding portion 76B.

The outer peripheral bus ring holding portion 76A is provided along the outer periphery of the stator 20 and includes grooves extending in the circumferential direction of the stator 20. The outer peripheral bus ring holding portion 76A holds the outer peripheral bus rings 150 (outer peripheral bus ring 150U, outer peripheral bus ring 150V, and outer peripheral bus ring 150W) with the grooves.

The inner peripheral bus ring holding portion 76B is provided along the inner periphery of the stator 20 and includes a groove extending in the circumferential direction of the stator 20. The inner peripheral bus ring holding portion 76B holds the inner peripheral bus ring 160 with the groove.

The terminal holder 140 has a plate-like shape and is disposed at the holder placement portion 15 of the case body 10. Specifically, the slit (not shown) provided at the lower end of the terminal holder 140 is fitted to the fixation wall 15A of the holder placement portion 15.

Note that, as shown in Fig. 10, the terminal holder 140 is fitted to the fixation wall 15A of the holder placement portion 15 from the side opposite to the case body 10.

Moreover, the terminal holder 140 holds each of the terminals 151 (terminal 151U, terminal 151V, and terminal 151W) provided at one end of corresponding one of the outer peripheral bus rings 150. Specifically, the terminal holder 140 holds the terminals 151 in a manner that the terminals 151 face outward in the radial direction (A direction).

The outer peripheral bus rings 150 form connecting wires on the three-phase (U phase, V phase, and W phase) side. The outer peripheral bus rings 150 are provided along the outer periphery of the stator 20. Meanwhile, the terminals 151 (terminal 151U, terminal 151V, and terminal 151W) to be disposed at the terminal holder 140 are provided at the ends of the outer peripheral bus rings 150, respectively. Moreover, the outer peripheral bus rings 150 are provided with locking pieces 152 (locking pieces 152U, locking pieces 152V, and locking pieces 152W), each of which is connected to one end of the corresponding one of the coils 75. In the first embodiment, each of the locking pieces 152 has a shape bent approximately perpendicular with respect to the rotating shaft direction. The locking piece 152 extends inward in the radial direction of the stator 20, i.e., toward the coil 75 so that the locking piece 152 can be connected to the one end of the coil 75.

Here, as shown in Fig. 10, the outer peripheral bus rings 150 are inserted from the side opposite to the case body 10 into the grooves provided on the outer peripheral bus ring holding portions 76A.

The inner peripheral bus ring 160 forms a connecting wire on the neutral side. The inner peripheral bus ring 160 is provided along the inner periphery of the stator 20. Moreover, the inner peripheral bus ring 160 is provided with locking pieces 162, each of which is connected to the other end of the corresponding one of the coils 75. In the first embodiment, each of the locking pieces 162 has a shape bent approximately perpendicular with respect to the rotating shaft direction. The locking piece 162 extends outward in the radial direction of the stator 20, i.e., toward the coil 75 so that the locking piece 162 can be connected to the other end of the coil 75.

Here, as shown in Fig. 10, the inner peripheral bus ring 160 is inserted from the side opposite to the case body 10 into the grooves provided on the inner peripheral bus ring holding portions 76B.

### (Configuration of Stator after being molded)

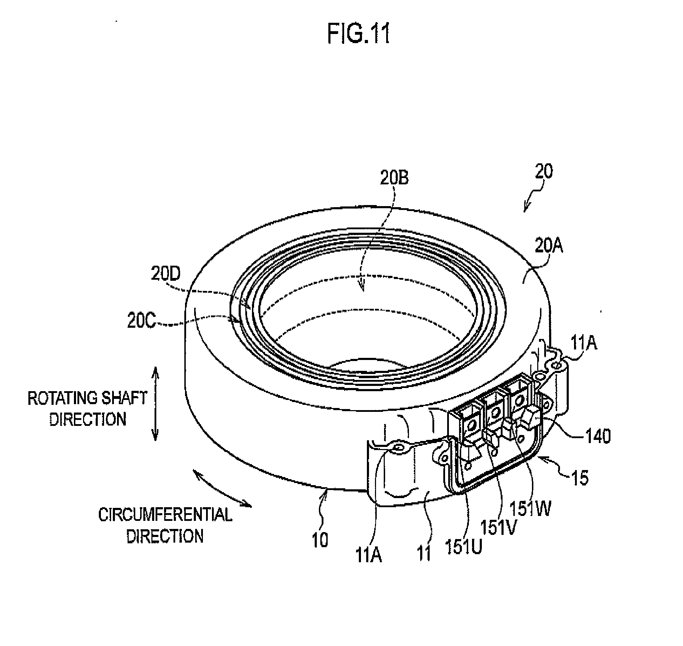

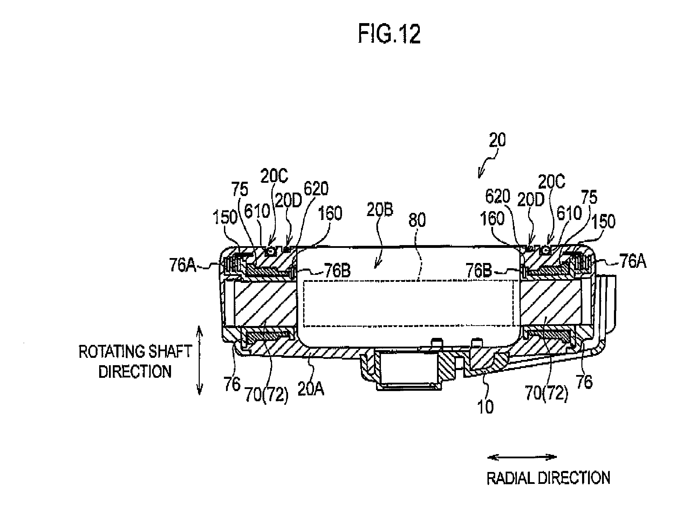

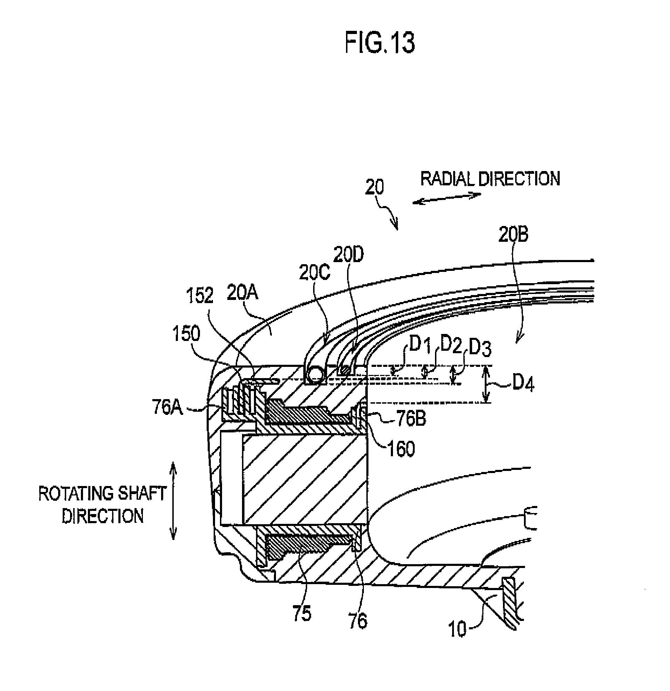

A configuration of the stator after being molded according to the first embodiment will be described below with reference to the accompanying drawings. Fig. 11 is a perspective view showing the stator 20 after being molded according to the first embodiment. Fig. 12 is a cross-sectional view showing the stator 20 after being molded according to the first embodiment. Fig. 13 is an enlarged cross-sectional view showing part of the stator 20 after being molded according to the first embodiment. It is to be noted that the stator 20 is assembled on the case body 10 in Fig. 11 to Fig. 13.

As shown in Fig. 11 to Fig. 13, the stator 20 is molded by the mold resin 20A. Specifically, an assembly formed of the case body 10, the stator core 70, the coils 75, the insulators 76, the terminal holder 140, the outer peripheral bus rings 150, and the inner peripheral bus ring 160 is molded by the mold resin 20A. However, it is to be noted that the case body 10, the terminal holder 140, and the terminals 151 (terminals 151U, terminal 151V, and terminal 151W) are exposed from the mold resin 20A to the outside.

The mold resin 20A is formed of a resin material and is used to mold the stator 20. The mold resin 20A includes an opening 20B, a cutout portion 20C, and a cutout portion 20D.

The opening 20B is provided on the side opposite to the case body 10. In other words, the opening 20B is provided on the second main surface of the stator 20. Moreover, the opening 20B is an opening which houses the rotor 80 as shown in Fig. 12. Note that the above-described lid body 30 is attached to the case body 10 so as to cover the opening 20B.

The cutout portion 20C is provided on the side opposite to the case body 10. In other words, the cutout portion 20C is provided on the second main surface (on the same side as the opening 20B) of the stator 20. The cutout portion 20C is a groove having a depth in the rotating shaft direction. The cutout portion 20C has an annular shape which is continuous in the circumferential direction. Here, the cutout portion 20C may be partially discontinuous in the circumferential direction.

For example, as shown in Fig. 12 and Fig. 13, a cooling pipe 610 serving as a flow passage of a liquid medium for cooling down the electric motor 100 is disposed in the cutout portion 20C.

The cutout portion 20D is provided on the side opposite to the case body 10. In other words, the cutout portion 20D is provided on the second main surface (on the same side as the opening 20B) of the stator 20. The cutout portion 20D is a groove having a depth in the rotating shaft direction. The cutout portion 20D has an annular shape which is continuous in the circumferential direction. Here, the cutout portion 20D may be partially discontinuous in the circumferential direction. Note that the cutout portion 20D is provided inward of the cutout portion 20C in the radial direction.

For example, the reinforcing rib 35 of the lid body 30 is disposed in the cutout portion 20D. Alternatively, as shown in Fig. 12 and Fig. 13, a sealing member 620 (rubber packing) for sealing a portion inward of the cutout portion 20D in the radial direction (i.e., on the opening 20B side) may be disposed in the cutout portion 20D together with the reinforcing rib 35.

Here, as shown in Fig. 13, a depth of the cutout portion 20D in the rotating shaft direction is D₁, the depth measured from a surface of the mold resin 20A on the side opposite to the case body 10. A depth of the cutout portion 20C in the rotating shaft direction is D₃, the depth measured from the surface of the mold resin 20A on the side opposite to the case body 10.

Upper ends of the outer peripheral bus rings 150 are provided at positions at a depth D₂ in the rotating shaft direction from the surface of the mold resin 20A on the side opposite to the case body 10. An upper end of the inner peripheral bus ring 160 is provided at a position at a depth D₄ in the rotating shaft direction from the surface of the mold resin 20A on the side opposite to the case body 10.

In other words, the outer peripheral bus rings 150 are provided at the positions higher than the inner peripheral bus ring 160 (D₄-D₂) in the rotating shaft direction. The bottom of the cutout portion 20C is located at the position deeper than that of the upper end of the outer peripheral bus ring 150 (D₃-D₂) and shallower than the upper end of the inner peripheral bus ring 160 (D₄-D₂) in the rotating shaft direction.

In the first embodiment, the bottom of the cutout portion 20D is provided at the position shallower than the upper ends of the outer peripheral bus rings 150 and the inner peripheral bus ring 160 in the rotating shaft direction. However, the embodiment is not limited to this configuration. The bottom of the cutout portion 20D may be located at a position deeper than those of the upper ends of the outer peripheral bus rings 150 and shallower than the upper end of the inner peripheral bus ring 160 in the rotating shaft direction.

In the first embodiment, the upper ends of the outer peripheral bus rings 150 are the above-described locking pieces 152, for example. Moreover, the upper end of the inner peripheral bus ring 160 is the above-described locking pieces 162.

### (Method of Manufacturing Electric Motor)

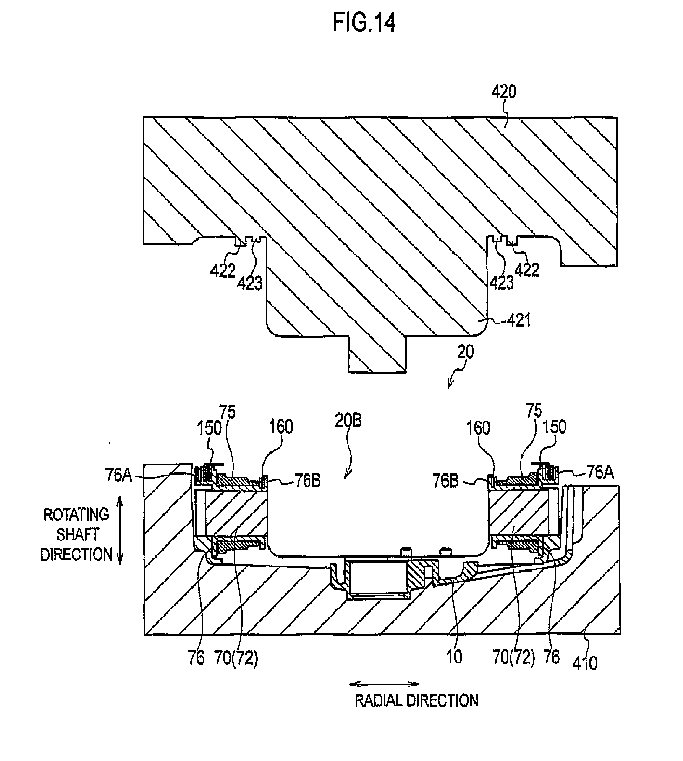

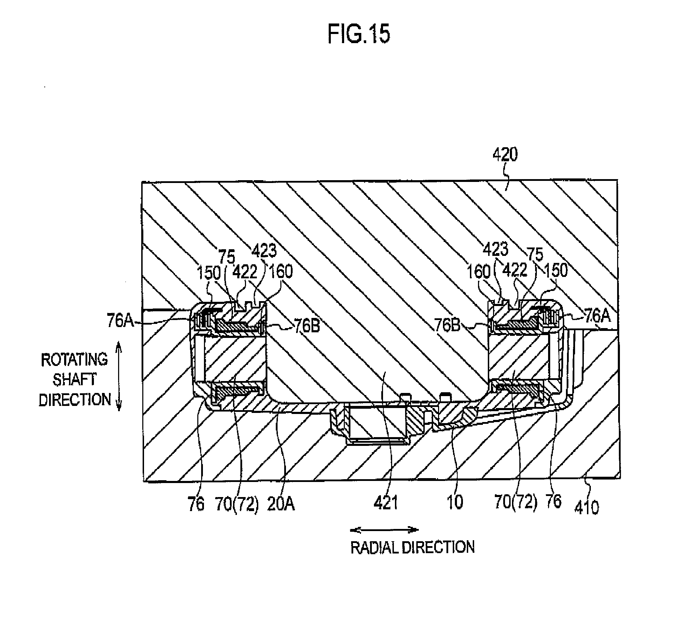

A method of manufacturing the electric motor according to the first embodiment will be described below with reference to the accompanying drawings. Fig. 14 and Fig. 15 are views for explaining the method of manufacturing the electric motor 100 according to the first embodiment.

Firstly, the stator 20 is assembled to the case body 10. Specifically, the insulators 76 to which the coils 75 are wound are assembled to the stator core 70. Subsequently, the outer peripheral bus rings 150 and the inner peripheral bus ring 160 are assembled to the insulators 76 while the stator core 70 and the terminal holder 140 are assembled to the case body 10. At this time, the terminals 151 provided on the ends of the outer peripheral bus rings 150 are disposed at the terminal holder 140.

Secondly, an assembly formed of the stator 20 and the case body 10 is disposed on a lower mold 410 as shown in Fig. 14. The lower mold 410 has a shape in conformity to the contour of the case body 10.

Thirdly, the lower mold 410 on which the assembly formed of the stator 20 and the case body 10 is disposed is fitted to an upper mold 420 as shown in Fig. 15. Here, the upper mold 420 includes a cylindrical protrusion 421, a circular protrusion 422, and a circular protrusion 423. The cylindrical protrusion 421 is a protrusion for forming the opening 20B for housing the rotor 80. The circular protrusion 422 is a protrusion for forming the above-described cutout portion 20C. The circular protrusion 423 is a protrusion for forming the above-described cutout portion 20D.

Fourthly, a resin material is injected into a space defined by the lower mold 410 and the upper mold 420. The mold resin 20A is formed by setting the resin material. Here, it is to be noted that the resin material is injected from the side opposite to the case body 10. Specifically, the outer peripheral bus rings 150 and the inner peripheral bus ring 160 receive stress in a direction toward the case body 10 by injection of the resin material.

Here, it is to be noted that the lower mold 410 and the upper mold 420 are fitted together so that the terminal holder 140 is exposed from the mold resin 20A on the outer side in the radial direction.

### (Operation and Effect)

In the first embodiment, the inner peripheral bus ring 160 is provided at the position the deeper than that of the outer peripheral bus rings 150 in the rotating shaft direction. Therefore, it is possible to ensure a space for disposing other members inward of the outer peripheral bus rings 150 in the radial direction of the stator 20, without increasing the size of the electric motor 100. Other members include the cooling pipe 610, the sealing member 620, and the reinforcing rib 35 provided on the lid body 30, for example. In this way, it is possible to downsize the electric motor 100.

For example, in the first embodiment, the mold resin 20A may be provided with the annular cutout portions having the bottom located at a position deeper than those of the upper ends of the outer peripheral bus rings 150 in the rotating shaft direction. The cooling pipe 610, the sealing member 620, and the reinforcing rib 35 provided on the lid body 30 can be disposed in the cutout portions.

In the first embodiment, the outer peripheral bus rings 150 including the terminals 151 exposed from the mold resin 20A to the outside are connected to the coils 75. Accordingly, it is not necessary to draw ends of the coils 75 out of the mold resin 20A. Hence, wire diameters of the coils 75 are not restricted.

In the first embodiment, the terminals 151 provided on the mold resin 20A are held by the terminal holder 140 provided outside the mold resin 20A. Hence, the stator 20 is easily molded.

To be more precise, the terminal holder 140 is fitted to the case body 10 (holder placement portion 15) which is configured to hold the stator 20 molded by the mold resin 20A. Hence, the stator 20 is easily molded.

Moreover, the terminal holder 140 is integrally attached to the case body 10 at the time of molding. Therefore, the stator 20 is molded by the mold resin 20A in a state where the outer peripheral bus rings 150 and the terminals 151 provided on the ends of the outer peripheral bus rings 150 are assembled to the terminal holder 140. As a consequence, adhesion between this terminal holder 140 and the mold resin 20A is remarkably increased on a back surface side of the terminal holder 140 (i.e., the side where the mold resin 20A is present). For example, when the terminal holder is attached after molding the stator, adhesion between this terminal holder and the mold resin is reduced. Accordingly, there is a risk of a gap forming between these constituents, which may allow infiltration of water and the like. However, the above-described first embodiment is able to reduce such a risk of gap formation.

In the first embodiment, the terminal holder 140 and the terminals 151 are exposed from the mold resin 20A to the outside, on an outer side of the stator 20 in the radial direction. Therefore, it is easy to wire the cables extending from the terminals 151.

In the first embodiment, each of the outer peripheral bus rings 150 and the inner peripheral bus ring 160 provided on the stator 20 is provided on the side opposite to the case body 10. Therefore, it is possible to suppress lifting of the outer peripheral bus rings 150 and the inner peripheral bus ring 160 by the stress applied to the case body 10 generated when the stator 20 is molded with the mold resin 20A. In this way, detachment of the outer peripheral bus rings 150 and the inner peripheral bus ring 160 at the time of molding is suppressed.

In particular, the locking pieces 152 of the outer peripheral bus rings 150 and the locking pieces 162 of the inner peripheral bus ring 160 have shapes bent with respect to the rotating shaft direction, and are therefore apt to receive the stress against a flow of the resin material injected at the time of molding. Accordingly, by only placing the outer peripheral bus rings 150 on the outer peripheral bus ring holding portions 76A provided in the stator 20 when the mold resin 20A is injected from the side opposite to the case body 10 (an upper side of the drawing in Fig. 15), it is possible to mold the outer peripheral bus rings 150 together with the stator 20 by using the mold resin 20A without requiring specific fixing means. Similarly, by only placing the inner peripheral bus ring 160 on the inner peripheral bus ring holding portions 76B provided in the stator 20, it is possible to mold the inner peripheral bus ring 160 together with the stator 20 by using the mold resin 20A.

To be more precise, the opening 20B for housing the rotor 80 is provided on the side where the outer peripheral bus rings 150 and the inner peripheral bus ring 160 are disposed. Specifically, it is possible to suppress lifting of the outer peripheral bus rings 150 and the inner peripheral bus ring 160 by the stress from the upper mold 420 having the cylindrical protrusion 421 for forming the opening 20B.

### (Second Embodiment)

### (Configuration of Electric Vehicle)

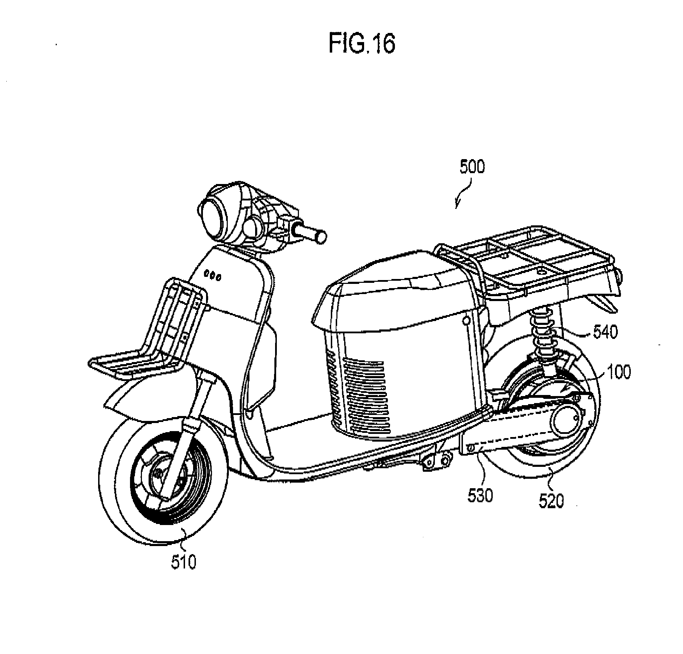

An electric vehicle according to a second embodiment will be described below with reference to the accompanying drawings. Fig. 16 is a view showing an example of an electric vehicle 500 according to the second embodiment. Note that the electric vehicle 500 is an example of a mobile object.

As shown in Fig. 16, the electric vehicle 500 is a motor bicycle which includes a front wheel 510, a rear wheel 520, a swing arm 530, and a suspension 540. The electric motor 100 is a drive source of the electric vehicle 500. Here, the electric motor 100 is provided on the rear wheel 520, and the rear wheel 520 is a drive wheel.

Note that the electric vehicle 500 equipped with the electric motor 100 is not limited only to the motor bicycle. For example, the electric vehicle 500 may also be a motor tricycle or a motorcar.

The swing arm 530 is attached to the electric motor 100. The swing arm 530 has a shape extending from the rear wheel 520 toward a front of the vehicle.

The suspension 540 has a function of absorbing vibrations, and is attached to the swing arm 530.

Here, it is to be noted that the terminals 151 provided on the ends of the above-described outer peripheral bus rings 150 are disposed on the side closer to the swing arm 530. Meanwhile, the terminal holder 140 is exposed on the outer side of the stator 20 in the radial direction at a position on a side closer to the swing arm 530. The terminal holder 140 holds the terminals 151 such that the terminals 151 face the front of the vehicle along a longitudinal direction of the swing arm 530.

In other words, when the electric motor 100 is disposed coaxially with the rear wheel 520 and the electric motor 100 is attached to the swing arm 530, the terminal holder 140 holds the terminals 151 such that the terminals 151 face the front of the vehicle. In this way, when a cable (such as a power line) extending from the terminals 151 are to be connected to a power source and a control circuit provided on the front side of the vehicle (such as a portion under a seat or a steering handle), a cable can be extended along the swing arm 530.

### (Third Embodiment)

### (Configuration of Boat)

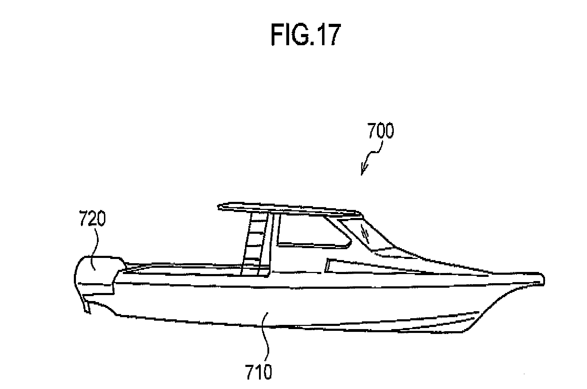

A boat according to a third embodiment will be described below with reference to the accompanying drawings. Fig. 17 is a view showing an example of a boat 700 according to the third embodiment. Note that the boat 700 is an example of a mobile object.

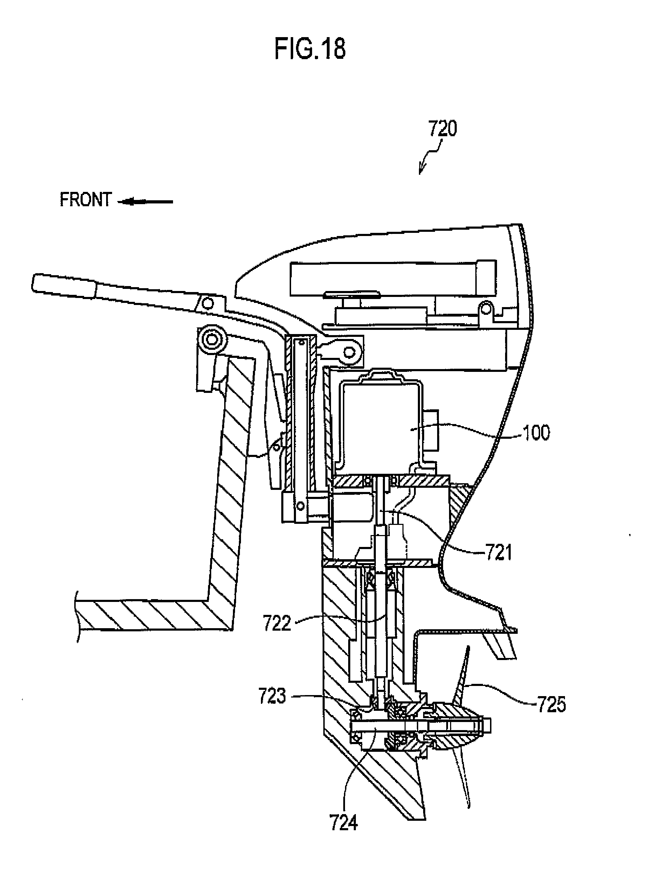

As shown in Fig. 17, the boat 700 includes a hull 710 and an outboard motor 720. The outboard motor 720 is configured to be attachable to the hull 710. As shown in Fig. 18, the outboard motor 720 includes the electric motor 100, an output shaft 721, a drive shaft 722, a bevel gear 723, a propeller shaft 724, and a propeller 725.

The output shaft 721 has a shape in which the axis thereof extends in a vertical direction. The output shaft 721 is connected to the drive shaft 722 and is configured to transmit the torque of the electric motor 100 to the drive shaft 722. The drive shaft 722 has a shape in which the axis thereof extends in the vertical direction. The drive shaft 722 is connected to the bevel gear 723 and is configured to transmit the torque of the output shaft 721 to the bevel gear 723. The bevel gear 723 is connected to the propeller shaft 724 and is configured to transmit the torque of the drive shaft 722 to the propeller shaft 724. The propeller shaft 724 has a shape in which the axis thereof extends in a horizontal direction. The propeller shaft 724 is connected to the propeller 725 and is configured to transmit the torque transmitted from the bevel gear 723 to the propeller 725. The propeller 725 is rotated by the torque transmitted from the propeller shaft 724.

In this way, the propeller 725 is rotated by the torque of the electric motor 100. In other words, the electric motor 100 is used as a power source of the outboard motor 720.

Note that the electric motor 100 is not limited only to the power source of the outboard motor 720. For example, the electric motor 100 may also be used as a power source of a device provided in the hull 710.

### [Other Embodiments]

As described above, the details of the present invention have been disclosed by using the embodiments of the present invention. However, it should not be understood that the description and drawings which constitute part of this disclosure limit the present invention. From this disclosure, various alternative embodiments, examples, and operation techniques will be easily found by those skilled in the art.

The embodiments have described the electric vehicle 500 and the boat 700 as examples of the mobile object. However, the mobile object is not limited to these ridable device. For example, the mobile object may be a vehicle, a ship robot or the like moving in unmanned state.

## Claims

1. An electric motor comprising:
a rotor configured to rotate about a rotating shaft;
a stator having a coil; and
a mold resin configured to mold the stator, wherein
the stator comprises:
an inner peripheral bus ring which is provided along an inner periphery of the stator and which is connected to the coil; and
an outer peripheral bus ring which is provided along an outer periphery of the stator and which is connected to the coil,
the inner peripheral bus ring is provided at a position deeper than a position of the outer peripheral bus ring in a direction of the rotating shaft.

2. The electric motor according to claim 1, wherein
the mold resin has a cutout portion of annular shape deeper than an upper end of the outer peripheral bus ring in the direction of the rotating shaft.

3. The electric motor according to claim 2, wherein
a sealing member is disposed in the cutout portion, to seal a portion inward of the cutout portion in a radial direction of a stator core.

4. The electric motor according to claim 2, wherein
a cylindrical coolant pipe forming a flow passage of a coolant is disposed in the cutout portion.

5. The electric motor according to claim 2, further comprising a lid body configured to cover an opening in which the rotor is housed, wherein
the lid body includes a reinforcing rib to reinforce the lid body, and the reinforcing rib provided on the lid body is disposed in the cutout portion.

6. A mobile object comprising the electric motor according to any one of claims 1 to 5.
